# EUROPÄISCHE PATENTSCHRIFT

(11) **EP 3 470 263 B1**
(45) Veröffentlichungstag und Bekanntmachung des Hinweises auf die Patenterteilung: **24.06.2020**
(21) Anmeldenummer: 18199065.6
(22) Anmeldetag: 08.10.2018
(51) Int. Cl.: B60P 1/26, B62D 33/027, B62D 33/037

(54) **KIPPBRÜCKENBORDWAND FÜR EIN KIPPERFAHRZEUG SOWIE EIN DAMIT AUSGERÜSTETES KIPPERFAHRZEUG**
TIPPING BRIDGE BOARD WALL FOR A TIPPER VEHICLE AND TIPPER VEHICLE PROVIDED WITH SAME
PANNEAU LATÉRAL DU PONT À BASCULE POUR UN VÉHICULE À BASCULE AINSI QUE VÉHICULE À BASCULE ÉQUIPÉ D'UN TEL PANNEAU LATÉRAL DU PONT À BASCULE

(30) Priorität: 12.10.2017 DE 102017218286
(43) Veröffentlichungstag der Anmeldung: 17.04.2019
(73) Patentinhaber: Franz Xaver Meiller Fahrzeug- und Maschinenfabrik - GmbH & Co KG, 80997 München (DE)
(72) Erfinder: POPP, Klaus, 82346 Andechs - Machtlfing (DE)
(74) Vertreter: Weickmann & Weickmann PartmbB

(56) Entgegenhaltungen:
- EP-A1- 0 113 265
- JP-A- H0 924 760
- US-A- 2 174 197
- US-A- 2 635 688
- US-A- 3 482 876

## Beschreibung

Die Erfindung betrifft eine Kippbrückenbordwand für ein Kipperfahrzeug, die eine Öffnung und eine Schiebeklappenvorrichtung mit eine Schiebeklappe zum wahlweisen Verschließen und Freigeben der Öffnung aufweist, wobei die Schiebeklappe zwischen einer Verschlussstellung und einer Öffnungsstellung geführt verschiebbar ist, so dass die Öffnung bei in Verschlussöffnung befindlicher Schiebeklappe versperrt - und bei in Öffnungsstellung befindlicher Schiebeklappe zumindest weitgehend offen ist, wobei die Schiebeklappenvorrichtung eine die Schiebeklappe bei deren Bewegungen zwischen der Verschlussstellung und der Öffnungsstellung führende Schiebeführungsanordnung und einen Betätigungsmechanismus zum Verschieben der Schiebeklappe umfasst, und wobei die Schiebeführungsanordnung Führungsbahnelemente zur Ineingriffnahme der Schiebeklappe an zwei einander entgegengesetzten, parallel zueinander verlaufenden Schiebeklappenseitenrändern aufweist, so dass die Führungsbahnelemente eine Führungsstrecke parallel zu den Schiebeklappenseitenrändern für die Bewegung der Schiebeklappe definieren.

Kippbrückenbordwände der vorstehend genannten Art findet man insbesondere als Heckwände von Kippbrücken von Kipperfahrzeugen, bei denen die Kippbrücke um eine heckseitige Kippachse kippbar ist, um rieselfähiges oder fluides Ladegut von der Kippbrücke abrutschen zu lassen. Hierzu kann in den meisten Fällen die betreffende Kippbrückenbordwand insgesamt in einen entsprechenden Öffnungszustand eingestellt werden, so dass ein maximaler heckseitiger Öffnungsquerschnitt an der Kippbrücke freigegeben ist, um Ladegut auszubringen. Bei der hier betrachteten Kippbrückenbordwand dient die darin vorgesehene Öffnung und die zu deren Verschluss oder Freigabe vorgesehene Schiebeklappenvorrichtung normalerweise dazu, rieselfähiges oder fluides Ladegut in einem gut kontrollierten Mengenstrom durch die Öffnung hindurch aus der Kippbrücke auszulassen. Hierzu kann die Bedienungsperson den Betätigungsmechanismus zum Verschieben der Schiebeklappe benutzen, um die freie Öffnungsweite der Öffnung jeweils einzustellen.

Derartige Kipperfahrzeuge kann man beispielsweise auch im Bereich der Landwirtschaft zum Transport von Getreidekorn finden. Dort wird die Schiebeklappenvorrichtung mit der Schiebeklappe auch als "Kornschieber" bezeichnet. Er wird dazu benutzt, das Getreidekorn dosiert aus der Kippbrücke auszulassen, etwa zur Probennahme oder zur Abfüllung in Behältnisse, etwa Säcke.

Auch Baustellenfahrzeuge, wie etwa Kiestransporter oder Sandtransporter, können mit derartigen Kippbrücken ausgestattet sind, wobei auch bei diesen Fahrzeugen die Schiebeklappenvorrichtung mit der Schiebeklappe an der Kippbrückenbordwandöffnung dazu dient, Ladegut, sei es nun körnig oder zäh fließend, von der Kippbrücke gut dosiert abzulassen.
Dokument US 2 174 197 A offenbart eine Kippbrückenbordwand beziehungsweise einen Schiebeklappenvorrichtungsset gemäß dem Oberbegriff des Anspruchs 1 beziehungsweise 9.

Bei den bekannten Kippbrücken mit Kippbrückenbordwänden der hier betrachteten Art ist die Schiebeführungsanordnung als Nutführung an beiden Schiebeklappenseitenrändern ausgebildet. Als Führungsbahnelemente sind somit Führungsnuten vorgesehen, in denen die Schiebeklappenseitenränder bei ihrer Verschiebebewegung geführt sind. Nachteilig an diesen Kippbrückenbordwänden ist, dass sich in den Führungsnuten leicht Schmutz, wie etwa Ladegutreste, ansammeln kann, wodurch das Bewegen der Schiebeklappe sehr schwergängig werden kann. Ein gut dosiertes Steuern der Schiebeklappenbewegung kann dadurch erschwert oder gar unmöglich gemacht sein.

Der vorliegenden Erfindung liegt die Aufgabe zugrunde, eine Kippbrückenbordwand der eingangs genannten Art bereitzustellen, welche mit einfachen Mitteln dahingehend verbessert ist, dass die Gefahr von Schmutzansammlungen im Bereich der Schiebeführungsanordnung erheblich reduziert ist, so dass eine durch Schmutzansammlungen verursachte, unerwünschte Schwergängigkeit der Schiebeklappe wirksam unterbunden werden kann.

Zur Lösung dieser Aufgabe wird eine Kippbrückenbordwand der eingangs genannten Art vorgeschlagen, die dadurch gekennzeichnet ist, dass die Schiebeführungsanordnung mehrere Führungsbahnelemente aufweist, die mit Abständen voneinander unter Bildung von Freiräumen dazwischen längs der Führungsstrecke beidseitig der Öffnung in Reihe angeordnet sind.

Im Unterschied zum Stand der Technik handelt es sich bei den Führungsbahnelementen der Schiebeführungsanordnung der erfindungsgemäßen Kippbrückenbordwand nicht um durchgehende Führungsnuten, sondern um quasi punktuelle Führungselemente.

Diese Führungsbahnelemente können beispielsweise winkelhakenförmig sein, so dass sie jeweils einen von der Kippbrückenbordwand abstehenden Abstandshalter und einen von dem Abstandshalter seitlich abstehenden, die Schiebeklappe zu deren Führung außen überlappenden Überlappungsabschnitt aufweisen. Sie können andererseits auch pilzförmig ausgestaltet sein, so dass der pilzkopfförmige Abschnitt die Schiebeklappe am Schiebeklappenseitenrand überlappt.

Der besondere Vorteil der Kippbrückenbordwand nach der Erfindung besteht darin, dass Schmutz, der ggf. zunächst an den Schiebeklappenseitenrändern haftet, bei der Bewegung der Schiebeklappe an den vereinzelten Führungsbahnelementen abgestreift wird und dabei von der Schiebeklappenvorrichtung abfallen kann. Die Zwischenräume zwischen den Führungsbahnelementen können so gewählt sein, dass sich im Bereich der Führungsbahnelemente keine größeren Dauersammelstellen für Schmutz bilden können.

Vorzugsweise weist die Schiebeklappenvorrichtung zwei seitlich neben der Öffnung angeordnete Trägerschienen auf, an denen die Führungsbahnelemente angeordnet sind. Die Führungsbahnelemente können daher bereits an den Trägerschienen vormontiert werden, bevor die Trägerschienen in ihrer Soll-Anordnung seitlich der Öffnung an der Kippbrückenbordwand befestigt werden. Auf diese Weise kann der Montageaufwand gering gehalten werden.

Der Betätigungsmechanismus ist gemäß einer bevorzugten Ausführungsform der Erfindung als ein von Hand betätigbarer Hebelmechanismus ausgebildet, der einen Handbetätigungshebel aufweist, welcher in eine Betätigungsstellung seitlich ausklappbar oder ausziehbar ist, so dass er für eine den Handbetätigungshebel bestimmungsgemäß betätigende Bedienungsperson einen hinreichend großen seitlichen Abstand zu der Öffnung bietet, so dass die Bedienungsperson nicht in kritischer Weise mit aus der Öffnung ausströmendem Ladegut in Berührung kommt. Vorzugsweise steht der Handbetätigungshebel in seiner Betätigungsstellung über den seitlichen Rand der Kippbrückenbordwand hinaus seitlich ab. Er ist dabei wahlweise nach oben oder nach unten schwenkbar, um die Schiebeklappe in die Öffnungsstellung bzw. in die Verschlussstellung zu bewegen.

Gegenstand der Erfindung ist auch eine Kippbrücke mit einer Kippbrückenbordwand nach wenigstens einem der vorhergehenden Ansprüche.

Gegenstand der Erfindung ist ferner ein Kipperfahrzeug mit einer solchen Kippbrücke.

Gegenstand der Erfindung ist auch ein Schiebeklappenvorrichtungsset für eine Kippbrückenbordwand, in der eine Öffnung vorgesehen ist, wobei das Schiebeklappenvorrichtungsset dadurch gekennzeichnet ist, dass es eine Schiebeklappe und zwei längs der Seitenränder der Öffnung anzuordnende Trägerschienen umfasst, von denen jede mehrere voneinander beabstandete und auf einer Linie mit Abständen dazwischen aufgereihte Führungsbahnelemente zur Führung der Schiebeklappe an einander entgegengesetzten Schiebeklappenseitenrändern trägt, so dass die Schiebeklappe im Einbauzustand an der Kippbrückenbordwand zwischen einer Verschlussstellung und einer Öffnungsstellung geführt bewegbar ist, so dass die Öffnung bei in Verschlussstellung befindlicher Schiebeklappe versperrt - und bei in Öffnungsstellung befindlicher Schiebeklappe zumindest weitgehend offen ist, wobei das Schiebeklappenvorrichtungsset ferner einen Betätigungsmechanismus zum Verschieben der Schiebeklappe umfasst.

Mit dem Schiebeklappenvorrichtungsset lässt sich eine mit einer betreffenden Öffnung präparierte Kippbrückenbordwand auf einfache Weise zu einer erfindungsgemäßen Kippbrückenbordwand nach wenigstens einem der Ansprüche 1-6 ausgestalten.

Ein Ausführungsbeispiel der Erfindung wird nachstehend unter Bezugnahme auf die Figuren näher erläutert.
- Figur 1: zeigt in einer Perspektivdarstellung eine Kippbrücke mit einer Kippbrückenbordwand nach der Erfindung.
- Figur 2: zeigt eine Draufsicht auf die Kippbrückenbordwand nach Figur 1 mit einem in Betätigungsstellung ausgeklappten Handbetätigungshebel einer Schiebeklappenvorrichtung mit in Verschlussstellung befindlicher Schiebeklappe.
- Figur 3: zeigt eine Draufsicht auf die Kippbrückenbordwand, wobei die Schiebeklappe in einer die Bordwandöffnung teilweise freigebenden Zwischenstellung eingestellt ist.
- Figur 4: zeigt eine Draufsicht auf die Bordwand, wobei die Schiebeklappe in ihrer maximalen Öffnungsstellung eingestellt ist.

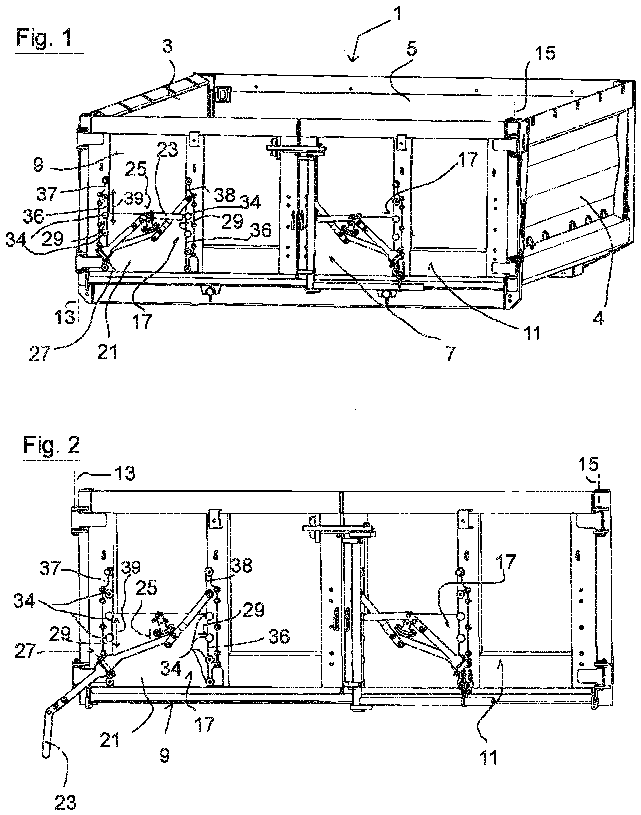

Die Kippbrücke 1 gemäß Figur 1 weist zwei Seitenwände 3, 4, eine Frontwand 5 und eine Heckwand 7 auf, welche eine Ladefläche umgeben.

Im Beispielsfall ist die Heckwand 7 in zwei Klapptüren 9, 11 unterteilt, die um normalerweise vertikale Schwenkachsen 13, 15 aus der gezeigten Schließstellung in eine Öffnungsstellung schwenkbar sind, um heckseitig einen maximalen Öffnungsquerschnitt der Kippbrücke 1 für rasches bzw. bequemes Abladen von Ladegut einzustellen.

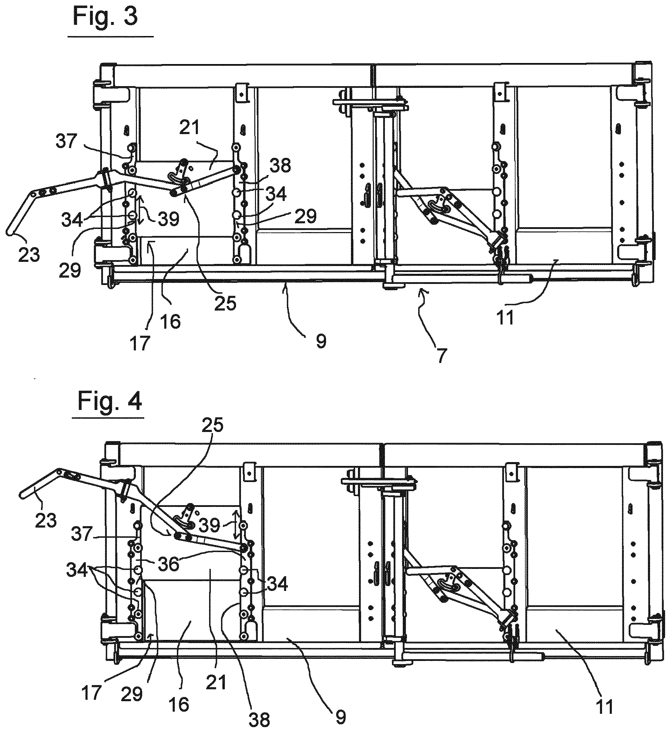

Jede der beiden Klapptüren 9, 11 weist eine jeweilige Öffnung 16 mit einer zugehörigen Schiebeklappenvorrichtung 17 auf. In Figur 3 und Figur 4 ist die Öffnung 16 im linken Bereich der Klapptür 9 im teilgeöffneten bzw. vollständig geöffneten Zustand erkennbar.

Da die Öffnungen 16 und Schiebeklappenvorrichtungen 17 beider Klapptüren 9, 11 im Wesentlichen gleichartig ausgestaltet sind, wird im Folgenden hauptsächlich auf die Öffnung 16 und Schiebeklappenvorrichtung 17 der in den Figuren linken Klapptür 9 Bezug genommen.

In Figur 1 sind die Öffnungen 16 der Heckwand 7 durch die Schiebeklappenvorrichtungen 17, 17 verschlossen, wobei die Schiebeklappen 21 in ihren Verschlussstellungen sind.

In Figur 2 ist erkennbar, dass ein Handbetätigungshebel 23 eines Hebelbetätigungsmechanismus 25 zum Bewegen der Schiebeklappe 21 aus seiner gesicherten Stellung gemäß Figur 1 heraus um eine im Beispielsfall schräge Schwenkachse 27 nach außen in eine Betätigungsstellung verschwenkt ist. Eine Bedienungsperson kann somit mit einem durch den ausgeklappten Betätigungshebel 23 vermittelten Sicherheitsabstand zu der Öffnung 16 den Hebelbetätigungsmechanismus 25 bedienen, um die Öffnungsweite der Öffnung 16 einzustellen.

Die Schiebeklappenvorrichtung 17 weist eine die Schiebeklappe 21 bei deren Bewegungen zwischen der Verschlussstellung gemäß Figur 1 und Figur 2 und der maximalen Öffnungsstellung gemäß Figur 4 führende Schiebeführungsanordnung 29 auf, gemäß welcher nahe an beiden Schiebeklappenseitenrändern 31, 32 mehrere pilzförmige oder flachkopfnietförmige Führungsbahnelemente 34 in einer jeweiligen vertikalen Reihe mit Abständen voneinander unter Bildung von Freiräumen 36 dazwischen angeordnet sind, so dass sie mit ihren erweiterten Kopfabschnitten die Schiebeklappe 21 über die jeweils benachbarten Schiebeklappenseitenränder 31, 32 hinweg um einige mm überlappen. Die Führungselemente definieren in ihrer Reihenanordnung eine lineare Führungsstrecke 39 parallel zu den Schiebeklappenseitenrändern 31, 32. Die so gestaltete Schiebeführungsanordnung 29 bietet eine zuverlässige Führung der Schiebeklappe 21 bei deren Bewegung zwischen der Verschlussstellung und der Öffnungsstellung.

Die Schiebeklappenvorrichtung 17 wirkt aufgrund der so gestalteten Schiebeführungsanordnung 29 quasi selbstreinigend, da etwaiger Schmutz an den Schiebeklappenseitenrändern 31, 32 bei der Bewegung der Schiebeklappe 21 automatisch an den Führungsbahnelementen 34 abgestreift wird und sich daher nicht in einer die Schiebeklappenbetätigung beeinträchtigenden Weise im Bereich die Schiebeführungsanordnung 29 ansammeln kann.

Im gezeigten Beispielsfall sind die Führungsbahnelemente 34 an Trägerschienen 37, 38 vormontiert vorgesehen. Die Trägerschienen 37, 38 sind mit der Heckwand 7 verschraubt.

Bei dem Hebelbetätigungsmechanismus 25 handelt es sich um einen übersetzenden Hebelmechanismus, welcher es erlaubt, die Schiebeklappe 21 mit geringem Kraftaufwand und bei fein abgestimmter Wegdosierung zwischen der Verschlussstellung gemäß Figur 1 und Figur 2 und der maximalen Öffnungsstellung gemäß Figur 4 zu verschieben.

## Patentansprüche

1. Kippbrückenbordwand (7) für ein Kipperfahrzeug, die eine Öffnung (16) und eine Schiebeklappenvorrichtung (17) mit einer Schiebeklappe (21) zum wahlweisen Verschließen und Freigeben der Öffnung (16) aufweist, wobei die Schiebeklappe (21) zwischen einer Verschlussstellung und einer Öffnungsstellung geführt verschiebbar ist, so dass die Öffnung (16) bei in Verschlussstellung befindlicher Schiebeklappe (21) versperrt- und bei in Öffnungsstellung befindlicher Schiebeklappe (21) zumindest weitgehend offen ist,
wobei die Schiebeklappenvorrichtung (17) eine die Schiebeklappe (21) bei deren Bewegungen zwischen der Verschlussstellung und der Öffnungsstellung führende Schiebeführungsanordnung (29) und einen Betätigungsmechanismus (25) zum Verschieben der Schiebeklappe (21) umfasst, und wobei die Schiebeführungsanordnung (29) Führungsbahnelemente (34) zur Ineingriffnahme der Schiebeklappe (21) an zwei einander entgegengesetzten, parallel zueinander verlaufenden Schiebeklappenseitenrändern (31, 32) aufweist, so dass die Führungsbahnelemente (34) eine Führungsstrecke (39) parallel zu den Schiebeklappenseitenrändern (31, 32) für die Bewegung der Schiebeklappe (21) definieren,
**dadurch gekennzeichnet,**
**dass** die Schiebeführungsanordnung (29) mehrere Führungsbahnelemente (34) aufweist, die mit Abständen voneinander unter Bildung von Freiräumen (36) dazwischen längs der Führungsstrecke (39) in Reihe angeordnet sind.

2. Kippbrückenbordwand nach Anspruch 1,
**dadurch gekennzeichnet, dass** die Führungsbahnelemente (34) jeweils einen von der Kippbrückenbordwand (7) abstehenden Abstandshalter und einen von dem Abstandshalter seitlich abstehenden, die Schiebeklappe (21) zu deren Führung überlappenden Überlappungsabschnitt aufweisen.

3. Kippbrückenbordwand nach Anspruch 1 oder 2, **dadurch gekennzeichnet, dass** die Führungsbahnelemente (34) winkelhakenförmig oder pilzförmig sind.

4. Kippbrückenbordwand nach wenigstens einem der vorher gehenden Ansprüche, **dadurch gekennzeichnet, dass** die Schiebeklappenvorrichtung (17) zwei seitlich neben der Öffnung (16) angeordnete Trägerschienen (37, 38) aufweist, an denen die betreffenden Führungsbahnelemente (34) befestigt sind.

5. Kippbrückenbordwand nach wenigstens einem der vorher gehenden Ansprüche, **dadurch gekennzeichnet, dass** der Betätigungsmechanismus (25) als ein von Hand betätigbarer Hebelmechanismus ausgebildet ist, der einen Handbetätigungshebel (23) aufweist, welcher in eine Betätigungsstellung seitlich ausklappbar oder ausziehbar ist, insbesondere so, dass er in seiner Betätigungsstellung über den Rand der Kippbrückenbordwand (7) hinaus seitlich absteht.

6. Kippbrückenbordwand nach Anspruch 5, **dadurch gekennzeichnet, dass** der Betätigungshebel (23) in seiner Betätigungsstellung wahlweise nach oben oder nach unten schwenkbar ist, um die Schiebeklappe (21) in die Öffnungsstellung bzw. in die Verschlussstellung zu bewegen.

7. Kippbrücke mit einer Kippbrückenbordwand (7) nach wenigstens einem der vorher gehenden Ansprüche.

8. Kipperfahrzeug mit einer Kippbrücke nach Anspruch 7.

9. Schiebeklappenvorrichtungsset für eine Kippbrückenbordwand (7), in der eine Öffnung (16) vorgesehen ist, **dadurch gekennzeichnet, dass** es eine Schiebeklappe (21) und zwei längs der Seitenränder der Öffnung anzuordnende Trägerschienen (37, 38) umfasst, von denen jede mehrere voneinander beabstandete und auf einer Linie aufgereihte Führungsbahnelemente (34) zur Führung der Schiebeklappe (21) an einander entgegen gesetzten Schiebeklappenseitenrändern (31, 32) trägt, so dass die Schiebeklappe im Einbauzustand an der Kippbrückenbordwand zwischen einer Verschlussstellung und einer Öffnungsstellung geführt bewegbar ist, so dass die Öffnung (16) bei in Verschlussstellung befindlicher Schiebeklappe versperrt- und bei in Öffnungsstellung befindlicher Schiebeklappe zumindest weitgehend offen ist, wobei das Schiebeklappenvorrichtungsset ferner einen Betätigungsmechanismus (25) zum Verschieben der Schiebeklappe umfasst.

## Claims

1. A tipper body tailgate (7) for a tipper vehicle, which has an opening (16) and a sliding flap device (17) with a sliding flap (21) for selectively closing and opening the opening (16), wherein the sliding flap (21) is displaceably guided between a closed position and an open position, so that the opening (16) is blocked when the sliding flap (21) is in the closed position and is at least largely open when the sliding flap (21) is in the open position, wherein the sliding flap device (17) comprises a sliding guide arrangement (29), which guides the sliding flap (21) during its movements between the closed position and the open position, and an actuating mechanism (25) for displacing the sliding flap (21), and wherein the sliding guide arrangement (29) has guide track elements (34) for engaging the sliding flap (21) on two sliding flap side edges (31, 32) which are opposed to one another and extend parallel to one another, so that the guide track elements (34) define a guide path (39) parallel to the sliding flap side edges (31, 32) for the movement of the sliding flap (21), **characterised in that** the sliding guide arrangement (29) has a plurality of guide track elements (34), which are arranged in series at intervals from one another to form free spaces (36) between them along the guide path (39).

2. Tipper body tailgate according to claim 1, **characterised in that** the guide track elements (34) each have a spacer which projects from the tipper body tailgate (7) and an overlapping section which projects laterally from the spacer and overlaps the sliding flap (21) to guide the latter.

3. The tipper body tailgate according to claim 1 or 2, **characterised in that** the guide track elements (34) have the shape of angled hooks or mushrooms.

4. The tipper body tailgate according to at least one of the preceding claims, **characterised in that** the sliding flap device (17) has two support rails (37, 38) which are arranged laterally adjacent to the opening (16) and to which the relevant guide track elements (34) are fastened.

5. The tipper body tailgate according to at least one of the preceding claims, **characterised in that** the actuating mechanism (25) is designed as a lever mechanism which can be actuated manually and has a manual actuating lever (23) which can be folded out or pulled out laterally into an actuation position, in particular so that in its actuation position it projects laterally beyond the edge of the tipper body tailgate (7).

6. The tipper body tailgate according to claim 5, **characterised in that** the actuating lever (23) in its actuating position can be selectively pivoted upwards or downwards in order to move the sliding flap (21) into the open position or into the closed position.

7. A tipper body with a tipper body tailgate (7) according to at least one of the preceding claims.

8. A tipper vehicle with a tipper body according to claim 7.

9. A sliding flap device set for a tipper body tailgate (7) in which an opening (16) is provided, **characterised in that** it comprises a sliding flap (21) and two support rails (37, 38) to be arranged along the side edges of the opening, each of which supports a plurality of guide track elements (34) which are spaced apart from one another and are lined up in a row for guiding the sliding flap (21) on sliding flap side edges (31, 32) which are opposite one another, so that in the installed state the sliding flap is guided and movable on the tipper body tailgate between a closed position and an open position, so that the opening (16) is blocked when the sliding flap is in the closed position and is at least largely open when the sliding flap is in the open position, wherein the sliding flap device set further comprises an actuating mechanism (25) for displacing the sliding flap.

## Revendications

1. Hayon de pont basculant (7) pour un camion à benne, qui présente une ouverture (16) et un dispositif à volet coulissant (17) avec un volet coulissant (21) pour fermer et dégager au choix l'ouverture (16), dans lequel le volet coulissant (21) peut être coulissé de manière guidée entre une position de fermeture et une position d'ouverture de sorte que l'ouverture (16) est bloquée lorsque le volet coulissant (21) se trouve en position de fermeture et est au moins largement ouverte quand le volet coulissant (21) se trouve en position d'ouverture,
dans lequel le dispositif à volet coulissant (17) comprend un ensemble de guidage coulissant (29) guidant le volet coulissant (21) lors de ses déplacements entre la position de fermeture et la position d'ouverture et un mécanisme d'actionnement (25) pour faire coulisser le volet coulissant (21), et dans lequel l'ensemble de guidage coulissant (29) présente des éléments de trajectoire de guidage (34) pour mettre en prise le volet coulissant (21) au niveau de deux bords latéraux de volet coulissant (31, 32) opposés l'un à l'autre, s'étendant de manière parallèle l'un par rapport à l'autre de sorte que les éléments de trajectoire de guidage (34) définissent un tronçon de guidage (39) de manière parallèle par rapport aux bords latéraux de volet coulissant (31, 32) pour le déplacement le volet coulissant (21),
**caractérisé en ce**
**que** l'ensemble de guidage coulissant (29) présente plusieurs éléments de trajectoire de guidage (34), qui sont disposés de manière alignée à des distances les uns des autres en formant des espaces libres (36) de manière intercalée le long du tronçon de guidage (39).

2. Hayon de pont basculant selon la revendication 1,
**caractérisé en ce que** les éléments de trajectoire de guidage (34) présentent respectivement un écarteur faisant saillie du hayon de pont basculant (7) et une section de chevauchement faisant saillie latéralement de l'écarteur, chevauchant le volet coulissant (21) pour son guidage.

3. Hayon de pont basculant selon la revendication 1 ou 2, **caractérisé en ce que** les éléments de trajectoire de guidage (34) sont en forme de crochets angulaires ou de champignons.

4. Hayon de pont basculant selon au moins l'une quelconque des revendications précédentes, **caractérisé en ce que** le dispositif à volet coulissant (17) présente deux rails de support (37, 38) disposés latéralement à côté de l'ouverture (16), au niveau desquels sont fixés les éléments de trajectoire de guidage (34) concernés.

5. Hayon de pont basculant selon au moins l'une quelconque des revendications précédentes, **caractérisé en ce que** le mécanisme d'actionnement (25) est réalisé en tant qu'un mécanisme à levier pouvant être actionné manuellement, qui présente un levier d'actionnement manuel (23), lequel peut être déployé par rabattement ou sorti par traction latéralement dans une position d'actionnement, en particulier de telle sorte qu'il fait saillie latéralement au-delà du bord du hayon de pont basculant (7) dans sa position d'actionnement.

6. Hayon de pont basculant selon la revendication 5, **caractérisé en ce que** le levier d'actionnement (23) peut être pivoté au choix vers le haut ou vers le bas dans sa position d'actionnement pour déplacer le volet coulissant (21) dans la position d'ouverture ou dans la position de fermeture.

7. Pont basculant avec un hayon de pont basculant (7) selon au moins l'une quelconque des revendications précédentes.

8. Camion à benne avec un pont basculant selon la revendication 7.

9. Ensemble à dispositif à volet coulissant pour un hayon de pont basculant (7), dans lequel est prévue une ouverture (16), **caractérisé en ce qu'**il comprend un volet coulissant (21) et deux rails de support (37, 38) à disposer le long des bords latéraux de l'ouverture, dont chacun supporte plusieurs éléments de trajectoire de guidage (34) tenus à distance les uns des autres et alignés sur une ligne pour le guidage du volet coulissant (21) au niveau de bords latéraux de volet coulissant (31, 32) opposés les uns aux autres de sorte que le volet coulissant peut être déplacé de manière guidée dans l'état de montage au niveau du hayon de pont basculant entre une position fermée et une position ouverte, de sorte que l'ouverture (16) est bloquée lorsque le volet coulissant se trouve en position de fermeture et est au moins largement ouverte quand le volet coulissant se trouve en position d'ouverture, dans lequel l'ensemble à dispositif à volet coulissant comprend en outre un mécanisme d'actionnement (25) pour faire coulisser le volet coulissant.
